# EUROPÄISCHE PATENTSCHRIFT

(11) **EP 3 011 462 B1**
(45) Veröffentlichungstag und Bekanntmachung des Hinweises auf die Patenterteilung: **20.09.2017**
(21) Anmeldenummer: 14727708.1
(22) Anmeldetag: 20.05.2014
(51) Int. Cl.: G06F 13/42

(54) **VERFAHREN ZUM INITIIEREN EINER DATENÜBERTRAGUNG**
METHOD FOR INITIATING A DATA TRANSMISSION
PROCÉDÉ DE DÉCLENCHEMENT D'UNE TRANSMISSION DE DONNÉES

(30) Priorität: 19.06.2013 DE 102013101277
(43) Veröffentlichungstag der Anmeldung: 27.04.2016
(73) Patentinhaber: Giesecke+Devrient Mobile Security GmbH, 81677 München (DE)
(72) Erfinder: MATHÉ, Werner, 82216 Maisach (DE)
(86) Internationale Anmeldenummer: PCT/EP2014/001358
(87) Internationale Veröffentlichungsnummer: WO 2014/202171

(56) Entgegenhaltungen:
- EP-A1- 1 237 090
- GB-A- 2 488 223
- US-A1- 2007 186 021

## Beschreibung

Die vorliegende Erfindung beschreibt ein Verfahren zur Initiierung einer Datenübertragung zwischen mindestens zwei Kommunikationsteilnehmern, z.B. einem Master und einem Slave, welche über eine Datenverbindung, z.B. ein Bussystem miteinander verbunden sind.

Aus dem Stand der Technik ist als ein Beispiel für eine Datenverbindung ein Bussystem, wie z.B. ein Serial Peripheral Interface, abgekürzt mit SPI, bekannt, welches eine Datenverbindung mittels drei oder vier Leitungen im Halb- oder Vollduplexverfahren ermöglicht. Bei SPI werden bei Vollduplex eine Leitung zur Auswahl eines Slaves, eine Taktleitung, eine Leitung zur Übertragung von Daten von einem Master an einen Slave und eine Leitung zur Übertragung von Daten von einem Slave an den Master verwendet. Bei Halbduplex wird zur Datenübertragung zwischen Master und Slave eine gemeinsame Leitung verwendet.

Problematisch bei SPI ist, dass es keine Möglichkeit gibt, dass der Slave dem Master signalisieren kann, dass er Daten an den Master übertragen möchte. Das bedeutet, dass der Slave erst dann Daten an den Master senden kann, wenn der Master den Slave dazu auffordert. Falls eine schnelle Reaktion des Slaves auf eine Anfrage des Masters gewünscht wird, dann muss der Master innerhalb kurzer Zeit mehrmals beim Slave anfragen, ob der Slave bereits eine Antwort auf die Anfrage vorbereitet hat und ob der Slave die Antwort schon an den Master senden kann. Dies hat den Nachteil, dass der Master viel Zeit nur mit Nachfragen beim Slave verbringt. Ferner kostet das häufige Nachfragen bei Master und Slave viel Energie, was insbesondere bei tragbaren Geräten, wie z.B. einem Mobiltelefon oder einem Laptop, etc. zu einem erhöhten Stromverbrauch ohne Nutzen führt. GB2488223 und EP1237090 offenbaren SPI Slaves, welche mit Hilfe einer zusätzlichen Leitung Kommunikationsbereitschaft an den Master signalisieren können. Ausgehend von den Nachteilen des Stands der Technik ist es Aufgabe der Erfindung eine Lösung für ein schnelles und energiesparendes Verfahren zur Datenübertragung zur Verfügung zu stellen.

Die Aufgabe der Erfindung wird durch den unabhängigen Anspruch gelöst. Vorteilhafte Ausführungen sind in den abhängigen Ansprüchen beschrieben.

Zur Lösung der Aufgabe offenbart die Erfindung ein Verfahren zum Initiieren einer Datenübertragung zwischen einer elektronischen Schaltung, die als Master wirkt, und mindestens einer anderen elektronischen Schaltung, die als Slave wirkt, wobei Master und Slave über ein Bussystem verbunden sind, wobei das Bussystem mindestens eine Taktleitung, eine Leitung zur Auswahl eines Slaves, eine Leitung zur Übertragung von Daten von einem Master an einen Slave und eine Leitung zur Übertragung von Daten von einem Slave an den Master umfasst, wobei sich die Erfindung dadurch auszeichnet, dass nachdem der Master eine Datenübertragung an den Slave abgeschlossen hat und der Master auf eine Antwort von dem Slave wartet, der Slave dem Master einen Sendewunsch seiner Antwort auf mindestens einer Leitung des Bussystems signalisiert, wobei die Signalisierung des Sendewunsches unterhalb einer Schwelle geschieht, welche einem aktiven Pegel auf einer Leitung des Bussystems entspricht. Das Verfahren hat den Vorteil, dass der Slave in der Lage ist, selbständig dem Master seinen Sendewunsch mitzuteilen ohne auf die nächste Abfrage des Masters hinsichtlich seiner Sendebereitschaft zu warten. Ferner spart das erfindungsgemäße Verfahren Energie, da nur dann Daten vom Slave zum Master übertragen werden, wenn Daten zur Übertragung bereit sind. Ein mehrmaliges Abfragen durch den Master mit dem Ergebnis, dass der Slave noch nicht bereit ist zur Datenübertragung, kommt mit der vorliegenden Erfindung somit nicht mehr vor und spart damit einen unnötigen Energieverbrauch durch Master und Slave.

Ein vorteilhaftes Ausführungsbeispiel der Erfindung ist, dass der Slave, um dem Master den Sendewunsch zu signalisieren, einen elektrischen Strom auf mindestens einer Leitung des Bussystems bewirkt.

Ein weiteres vorteilhaftes Ausführungsbeispiel der Erfindung ist, dass der Slave den Strom über einen Widerstand verändert. Als Widerstand kann hier jedes aktive und passive Element verstanden werden, um z.B. den Strom zu beeinflussen, mit welchem der Slave dem Master seinen Sendewunsch signalisiert. Als Beispiel für ein passives Element ist hier ein ohmscher Widerstand genannt.

Ein weiteres vorteilhaftes Ausführungsbeispiel der Erfindung ist, dass der Slave den Strom auf der Taktleitung oder der Leitung zur Auswahl eines Slaves bewirkt. Neben den beiden genannten Leitungen kann jede andere geeignete Leitung verwendet werden, um dem Master den Sendewunsch des Slaves mittels des Stroms zu signalisieren.

Ein weiteres vorteilhaftes Ausführungsbeispiel der Erfindung ist, dass sobald der Master erkennt, dass auf der Taktleitung ein Strom fließt, gibt der Master ein Taktsignal aus, um vom Slave Daten abzurufen.

Ein weiteres vorteilhaftes Ausführungsbeispiel der Erfindung ist, dass mit dem ersten Wechsel des vom Master ausgegebenen Taktsignals zum aktiven Pegel auf der Taktleitung der Slave die Veränderung des Stroms auf der Taktleitung beendet.

Ein weiteres vorteilhaftes Ausführungsbeispiel der Erfindung ist, dass sobald der Master erkennt, dass auf der Leitung zur Auswahl eines Slaves ein Strom fließt, gibt der Master ein Signal auf der Leitung zur Auswahl eines Slaves aus, um den Slave, welcher den Sendewunsch hat, auszuwählen und von diesem Daten abzurufen.

Ein weiteres vorteilhaftes Ausführungsbeispiel der Erfindung ist, dass der Slave die Veränderung des Stroms auf der Leitung zur Auswahl eines Slaves beendet, sobald der Master den Slave ausgewählt hat, um Daten von dem Slave abzurufen.

Ein weiteres vorteilhaftes Ausführungsbeispiel der Erfindung ist, dass es sich um eine synchrone Datenübertragung handelt. Alternativ kann es sich auch um eine asynchrone Datenverbindung handeln.

Ein weiteres vorteilhaftes Ausführungsbeispiel der Erfindung ist, dass die Leitungen des Bussystems inaktiv und stromlos sind, solange zwischen Master und Slave keine Datenübertragung stattfindet. Dies hat den Vorteil, dass Energie gespart wird.

Ein weiteres vorteilhaftes Ausführungsbeispiel der Erfindung ist, dass es sich bei dem Bussystem um ein Serial Peripheral Interface handelt.

Im Folgenden wird ein Ausführungsbeispiel der Erfindung anhand der beigefügten Figuren detailliert beschrieben.
Figur 1 zeigt ein Ausführungsbeispiel der Erfindung mit einem Master und einem Slave, wobei der Slave einen Strom auf der Taktleitung SCLK verändert, um dem Master einen Sendewunsch mitzuteilen.
Figur 2 zeigt ein weiteres Ausführungsbeispiel mit einem Master und zwei Slaves, wobei die Mitteilung des Sendewunsches an den Master mittels der Leitung zur Auswahl eines Slaves !SS1 oder !SS2 erfolgt.

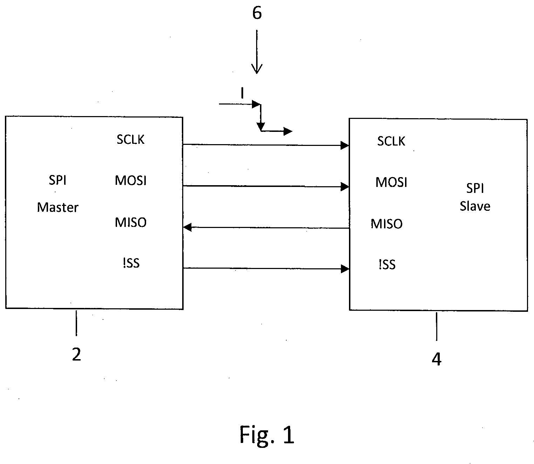

In Figur 1 wird ein Ausführungsbeispiel der Erfindung anhand von einem Master 2 und einem Slave 4 gemäß einem Bussystem nach einem Serial-Peripheral-Interface-Standard, abgekürzt SPI, beschrieben. Master 2 und Slave 4 sind über eine Taktleitung SCLK, eine Leitung zur Auswahl eines Slaves !SS, eine Leitung zur Übertragung von Daten von einem Master an einen Slave MOSI und eine Leitung zur Übertragung von Daten von einem Slave an den Master MISO verbunden. Die Übertragungsrichtung ist mittels der Pfeile angedeutet.

Eine erste Variante des Ausführungsbeispiels der Erfindung beschreibt, wie der Slave 4 einen Strom I auf der Taktleitung SCLK verändert, um dem Master 2 seinen Sendewunsch mitzuteilen. Nachdem der Master 2 mit einer Datenübertragung an den Slave 4 fertig ist, der Master 2 also eine letzte Signalflanke in Richtung Slave 4 getrieben hat, und auf eine Antwort vom Slave 4 wartet, beobachtet der Master 2 mittels einer geeigneten Schaltung (z.B. einen Stromspiegel), welche nicht dargestellt ist in Figur 1, einen Strom I, welcher auf der Taktleitung SCLK fließt. Sobald der Slave 4 die Antwort an den Master 2 vorbereitet hat, verändert oder bewirkt der Slave 4 mittels einer geeigneten Schaltung, welche nicht dargestellt ist, z.B. im einfachsten Fall mittels eines Widerstands, einen Verlauf 6 des Stroms I, um den Master 2 auf seinen Sendewunsch hinzuweisen. Der Strom I kann durch den Slave 4 so verändert werden, dass der Strom I erhöht wird. Erfindungsgemäß fließt nur dann ein Strom I, wenn ein Datenaustausch oder eine Signalisierung des Sendewunsches des Slaves 4 stattfindet. Ansonsten fließt kein Strom I um Energie zu sparen. Wesentlich für die Erfindung ist, dass der Slave 4 den Strom I so verändert, dass der Strom I immer kleiner ist, als die Schwelle bzw. Wert, welcher einem aktiven Pegel oder aktiven Wert auf einer Leitung, z.B. eines Bussystems gemäß SPI, hier der Taktleitung SCLK, entspricht. Der Master 2 weist eine Schaltung auf, um die Veränderung 6 des Stroms I zu erkennen, wobei die Schaltung nicht dargestellt ist. Wenn der Master 2 eine Veränderung 6 des Stroms I erkennt, dann gibt der Master 2 über die Taktleitung SCLK ein Taktsignal an den Slave 4 aus, um die Daten des Slaves 4 abzufragen, welche der Slave 4 gemäß seinem Sendewunsch angekündigt hat. Beim ersten Wechsel zum aktiven Pegel oder aktiven Wert auf der Taktleitung SCLK beendet der Slave 4 die Veränderung 6 des Stroms I um seinen Sendewunsch dem Master 2 mitzuteilen.

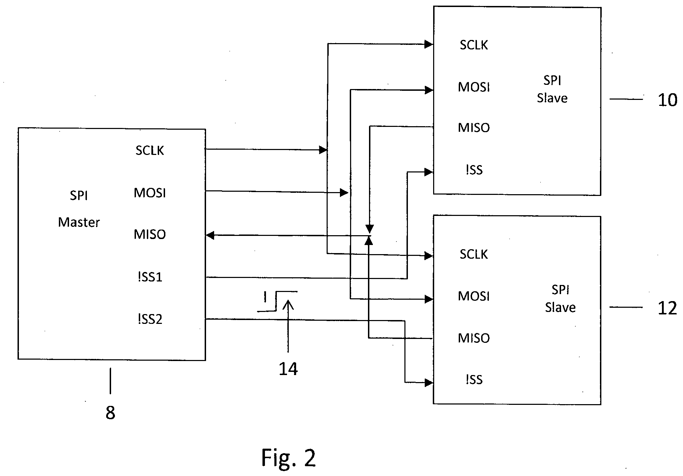

Figur 2 zeigt ein weiteres Ausführungsbeispiel mit einem Master 8 und zwei Slaves 10,12, wobei die Mitteilung eines Sendewunsches an den Master 8 mittels der Leitung zur Auswahl eines Slaves !SS1 oder !SS2 erfolgt. Beispielsweise weist ein Strom I eine Veränderung 14 auf der Leitung zur Auswahl eines Slaves !SS2 auf, wobei die Veränderung 14 durch den Slave 12 bewirkt wird. Entsprechend der oben bei Figur 1 beschriebenen ersten Variante beobachtet der Master 8 den Strom I beispielsweise auf der Leitung !SS2. Wenn der Master 8 entsprechend eine Veränderung 14 des Stroms I auf der Leitung !SS2 erkennt, dann gibt der Master 8 auf der Leitung !SS2 ein Signal aus, um den Slave 12 zur Übertragung von Daten an den Master 8 auszuwählen. Sobald der Slave 12 vom Master 8 über die Leitung !SS2 ausgewählt wurde, beendet der Slave 12 die Veränderung 14 des Stroms I, entsprechend der obigen Beschreibung von Figur 1.

Somit ist der große Vorteil der Erfindung, dass der Stromverbrauch für die Zeit, während der Master 2, 8 auf eine Antwort vom Slave 4,12 wartet, deutlich verringert wird, da der Master 2, 8 nicht ständig beim Slave 4,12 nach einem Ergebnis fragen muss.

Beispielsweise kann die vorliegende Erfindung vorteilhaft bei Anwendungen eingesetzt werden, wie z.B. bei Chipkartenanwendungen oder bei mobilen Geräten, z.B. Mobiltelefonen, wo ein unnötiger Energieverbrauch möglichst vermieden werden soll.

## Patentansprüche

1. Verfahren zum Initiieren einer Datenübertragung zwischen einer elektronischen Schaltung, die als Master (2, 8) wirkt, und mindestens einer anderen elektronischen Schaltung, die als Slave (4,10,12) wirkt, wobei Master (2, 8) und Slave (4,10,12) über ein Bussystem verbunden sind,
wobei das Bussystem mindestens
- eine Taktleitung (SCLK),
- eine Leitung zur Auswahl eines Slaves (!SS),
- eine Leitung zur Übertragung von Daten von einem Master an einen Slave (MOSI) und
- eine Leitung zur Übertragung von Daten von einem Slave an den Master (MISO) umfasst,
wobei nachdem der Master (2, 8) eine Datenübertragung an den Slave (4,10,12) abgeschlossen hat und der Master (2, 8) auf eine Antwort von dem Slave (4, 10, 12) wartet, der Slave (4,10,12) dem Master (2,8) einen Sendewunsch seiner Antwort auf mindestens einer Leitung des Bussystems signalisiert,
wobei der Slave (4,10,12), um dem Master (2, 8) den Sendewunsch zu signalisieren, einen elektrischen Strom (I) auf mindestens einer Leitung des Bussystems bewirkt, **dadurch gekennzeichnet, dass** der Slave (4,10,12) den Strom (I) auf der Taktleitung (SCLK) oder der Leitung zur Auswahl eines Slaves (!SS) bewirkt.

2. Verfahren nach Anspruch 1, **dadurch gekennzeichnet, dass** der Slave (4, 10, 12) den Strom (I) über einen Widerstand verändert (6).

3. Verfahren nach Anspruch 1 oder 2, **dadurch gekennzeichnet, dass** sobald der Master (2, 8) erkennt, dass auf der Taktleitung (SCLK) ein Strom (I) fließt, gibt der Master (2,8) ein Taktsignal aus, um vom Slave (4,10,12) Daten abzurufen.

4. Verfahren nach Anspruch 3, **dadurch gekennzeichnet, dass** mit dem ersten Wechsel des vom Master (2,8) ausgegebenen Taktsignals auf der Taktleitung (SCLK) der Slave (4,10,12) die Veränderung (6) des Stroms (I) auf der Taktleitung (SCLK) beendet.

5. Verfahren nach Anspruch 1 oder 2, **dadurch gekennzeichnet, dass** sobald der Master (2, 8) erkennt, dass auf der Leitung zur Auswahl eines Slaves (!SS) ein Strom (I) fließt, gibt der Master (2, 8) ein Signal auf der Leitung zur Auswahl eines Slaves (!SS) aus, um den Slave (4,10,12), welcher den Sendewunsch hat, auszuwählen und von diesem Daten abzurufen.

6. Verfahren nach Anspruch 5, **dadurch gekennzeichnet, dass** der Slave (4,10,12) die Veränderung (6) des Stroms (I) auf der Leitung zur Auswahl eines Slaves (!SS) beendet, sobald der Master (2, 8) den Slave (4, 10, 12) ausgewählt hat, um Daten von dem Slave (4,10,12) abzurufen.

7. Verfahren nach einem der vorherigen Ansprüche, **dadurch gekennzeichnet, dass** es sich um eine synchrone Datenübertragung zwischen Master (2,8) und Slave (4,10,12) handelt.

8. Verfahren nach einem der vorherigen Ansprüche, **dadurch gekennzeichnet, dass** es sich bei dem Bussystem um ein Serial Peripheral Interface handelt.

## Claims

1. A method for initiating a data transfer between an electronic circuit which acts as a master (2, 8), and at least one other electronic circuit which acts as a slave (4, 10, 12), wherein the master (2, 8) and the slave (4, 10, 12) are connected via a bus system, wherein the bus system comprises at least
- one clock line (SCLK)
- one line for selecting a slave (!SS)
- one line for transferring data from a master to a slave (MOSI) and
- one line for transferring data from a slave to the master (MISO),
wherein, after the master (2, 8) has completed a data transfer to the slave (4, 10, 12) and the master (2, 8) is waiting for a response from the slave (4, 10, 12), the slave (4, 10, 12) signals to the master (2, 8) a send request for its response on at least one line of the bus system,
wherein the slave (4, 10, 12) effects an electric current (I) on at least one line of the bus system in order to signal the send request to the master (2, 8),
**characterized in that** the slave (4, 10, 12) effects the current (I) on the clock line (SCLK) or the line for selecting a slave (!SS).

2. The method according to claim 1, **characterized in that** the slave (4, 10, 12) changes (6) the current (I) through a resistor.

3. The method according to claim 1 or 2, **characterized in that,** as soon as the master (2, 8) detects that a current (I) is flowing on the clock line (SCLK), the master (2, 8) outputs a clock signal to retrieve data from the slave (4, 10, 12).

4. The method according to claim 3, **characterized in that** with the first change of the clock signal output by the master (2, 8) on the clock line (SCLK) the slave (4, 10, 12) ends the change (6) of the current (I) on the clock line (SCLK).

5. The method according to claim 1 or 2, **characterized in that** as soon as the master (2, 8) detects that a current (I) is flowing on the line for selecting a slave (! SS), the master (2, 8) outputs a signal on the line for selecting a slave (!SS) to select the slave (4, 10, 12) which has the send request and to retrieve data from the same.

6. The method according to claim 5, **characterized in that** the slave (4, 10, 12) ends the change (6) of the current (I) on the line for selecting a slave (!SS) as soon as the master (2, 8) has selected the slave (4, 10, 12) to retrieve data from the slave (4, 10, 12).

7. The method according any of the preceding claims, **characterized in that** a synchronous data transfer takes place between the master (2, 8) and the slave (4, 10, 12).

8. The method according to any of the preceding claims, **characterized in that** the bus system is a serial peripheral interface.

## Revendications

1. Procédé de lancement d'une transmission de données entre un circuit électronique, lequel agit en tant que maître (2, 8), et au moins un autre circuit électronique, lequel agit en tant qu'esclave (4, 10, 12), le maître (2, 8) et l'esclave (4, 10, 12) étant reliées par l'intermédiaire d'un système bus , le système bus comprenant au moins
- une ligne d'horloge (SCLK),
- une ligne de sélection d'un esclave (!SS),
- une ligne de transmission de données d'un maître à un esclave (MOSI) et
- une ligne de transmission de données d'un esclave au maître (MISO),
cependant que, après que le maître (2, 8) a achevé une transmission de données à l'esclave (4, 10, 12) et que le maître (2, 8) attend une réponse de la part de l'esclave (4, 10, 12), l'esclave (4, 10, 12) signale au maître (2, 8) un souhait d'envoi de sa réponse sur au moins une ligne du système bus,
cependant que l'esclave (4, 10, 12), afin de signaler au maître (2, 8) le souhait d'envoi, provoque un courant électrique (I) sur au moins une ligne du système bus,
**caractérisé en ce que**
l'esclave (4, 10, 12) provoque le courant électrique (I) sur la ligne d'horloge (SCLK) ou sur la ligne de sélection d'un esclave (!SS).

2. Procédé selon la revendication 1, **caractérisé en ce que** l'esclave (4, 10, 12) modifie (6) le courant (I) par l'intermédiaire d'une résistance.

3. Procédé selon la revendication 1 ou 2, **caractérisé en ce que,** dès que le maître (2, 8) reconnaît que, sur la ligne d'horloge (SCLK), un courant (I) passe, le maître (2, 8) émet un signal d'horloge afin de récupérer des données à partir de l'esclave (4, 10, 12).

4. Procédé selon la revendication 3, **caractérisé en ce que,** au premier changement du signal d'horloge émis par le maître (2, 8), sur la ligne d'horloge (SCLK), l'esclave (4, 10, 12) cesse la modification (6) du courant (I) sur la ligne d'horloge (SCLK).

5. Procédé selon la revendication 1 ou 2, **caractérisé en ce que,** dès que le maître (2, 8) reconnaît que, sur la ligne de sélection d'un esclave (!SS), un courant (I) passe, le maître (2, 8) émet un signal sur la ligne de sélection d'un esclave (!SS) afin de sélectionner l'esclave (4, 10, 12) qui a le souhait d'envoi et pour récupérer des données à partir de lui.

6. Procédé selon la revendication 5, **caractérisé en ce que** l'esclave (4, 10, 12) cesse la modification (6) du courant (I) sur la ligne de sélection d'un esclave (!SS) dès que le maître (2, 8) a sélectionné l'esclave (4, 10, 12) pour récupérer des données à partir de l'esclave (4, 10, 12).

7. Procédé selon une des revendications précédentes, **caractérisé en ce qu'**il s'agit d'une transmission de données synchrone entre maître (2, 8) et esclave (4, 10, 12).

8. Procédé selon une des revendications précédentes, **caractérisé en ce que** le système bus consiste en une Serial Peripheral Interface.
